# EUROPÄISCHE PATENTSCHRIFT

(11) **EP 4 070 004 B1**
(45) Veröffentlichungstag und Bekanntmachung des Hinweises auf die Patenterteilung: **31.07.2024**
(21) Anmeldenummer: 20800052.1
(22) Anmeldetag: 26.10.2020
(51) Int. Cl.: F16L 37/088

(54) **STECKKUPPLUNG FÜR FLUIDLEITUNGEN**
PLUG-IN COUPLING FOR FLUID LINES
ACCOUPLEMENT ENFICHABLE POUR CONDUITES DE FLUIDE

(30) Priorität: 03.12.2019 DE 102019218733
(43) Veröffentlichungstag der Anmeldung: 12.10.2022
(73) Patentinhaber: ContiTech Techno-Chemie GmbH, 61184 Karben (DE)
(72) Erfinder: FLACH, Axel, 30165 Hannover (DE); KUHLHOFF, Florian, 30165 Hannover (DE)
(74) Vertreter: Continental Corporation
(86) Internationale Anmeldenummer: PCT/EP2020/080038
(87) Internationale Veröffentlichungsnummer: WO 2021/110325

(56) Entgegenhaltungen:
- EP-A1- 1 158 236
- EP-A1- 3 584 489
- DE-A1- 3 831 611
- US-A1- 2006 022 460

## Beschreibung

Die Erfindung betrifft eine Steckkupplung für Fluidleitungen, umfassend mindestens einen weiblichen Leitungsabschnitt, der im Wesentlichen aus Kunststoff ausgebildet ist und in den ein männlicher Leitungsabschnitt dichtenden einsteckbar ist und eine federnde Verriegelungsvorrichtung, mittels derer die Leitungsabschnitte miteinander verriegelbar und entregelbar sind, wobei die Vorrichtung mindestens ein Federsperrelement aufweist und der weibliche Leitungsabschnitt Sperröffnungen aufweist, die mit dem mindestens einen Federsperrelement korrespondieren.

Derartige Steckkupplungen sind beispielsweise als VDA-Steckkupplungen für eine Vielzahl von Anwendungen bekannt. Zur Gewichts- und Kosteneinsparung sind dabei die Leitungsabschnitt häufig aus Kunststoff ausgebildet.

Insbesondere bei der Verwendung in Ladeluftleitungen sind die Leitungsabschnitte deutlichen Druckschwankungen, Vibrationen und Wärmeabstrahlungen von Motorkomponenten ausgesetzt.

Die DE 10 2012 007 670 A1 offenbart eine Steckkupplung, bei der die Verriegelung eine Verriegelungs- eine Betätigungs- und eine Vorspanneinrichtung aufweist. Die Verriegelungseinrichtung greift mit Sperrelementen durch Öffnungen des weiblichen Leitungsabschnitts hindurch, wodurch ein männlicher Leitungsabschnitt mittels einer entsprechenden Nut im weiblichen Leitungsabschnitt verriegelbar ist. Über die Betätigungseinrichtung lässt sich diese Verriegelung wieder aufheben.

Die EP 1 158 236 A1 offenbart eine Steckkupplung, welche eine metallische Aussenhülle, einen Einsatz und einen Haltebügel aus Kunststoff umfasst.

Abgesehen davon, dass diese Lösung aufgrund der Vielzahl an Bauteilen recht aufwendig ist, weist sie, wie ähnliche, bekannte Lösungen auch den Nachteil auf, dass die Öffnungen, in die die Sperrelemente eingreifen, bei Kunststoffteilen durch die geschilderten dynamischen Belastungen der Steckkupplung ausschlagen können. Dabei kann es auch zum Ausbrechen der Öffnungen kommen, so dass eine Zerstörung der Steckkupplungen die Folge sein kann.

Der Erfindung lag die Aufgabe zugrunde, eine Steckkupplung der geschilderten Art derart zu verbessern, dass sie dynamischen Belastungen mit hoher Sicherheit standhält.

Diese Aufgabe wird dadurch gelöst, dass der weibliche Leitungsabschnitt im Bereich der Sperröffnungen mindestens eine Verstärkung in Form eines aufgesetzten oder eingebetteten Rings aus einem metallischen Werkstoff aufweist
Eine so ausgestaltete metallische Verstärkung kann eine hohe Flächenpressung aufnehmen, so dass auch bei dynamischen Belastungen Haltekräfte des in die Sperröffnungen eingreifenden Federsperrelements gut aufnehmbar sind.

Erfindungsgemäß ist die mindestens eine metallische Verstärkung als Ring ausgebildet, der im Bereich der Sperröffnungen um den weiblichen Leitungsabschnitt herum angeordnet ist.

Auf diese Weise stößt das Federsperrelement auch bei hohen Belastungen im Wesentlichen gegen den metallischen Ring, so dass das Kunststoffmaterial des weiblichen Leitungsabschnitts weniger stark beansprucht wird.

Weiter weist der metallische Ring Durchbrüche auf, die mit den Sperröffnungen korrespondieren, so dass das Federsperrelement bei fertig montierter Kupplung sowohl durch die Durchbrüche des metallischen Ringes als auch durch die Sperröffnungen eingreifen kann.

Damit ist eine besonders gute Verteilung der Kräfte des Federsperrelements gegeben.

In einer erfindungsgemäßen Alternative ist der metallische Ring als geschlitzter Federring ausgebildet und weist der weibliche Leitungsabschnitt axial voneinander beabstandete Ringstege auf, zwischen denen der geschlitzte Federring positionierbar ist, so dass der Federring axial auf dem weiblichen Leitungsabschnitt festgelegt ist.

Die Ringstege nehmen zusätzlich die Kräfte auf, die von dem Federsperrelement auf den Federring übertragen werden, so dass eine noch bessere Kräfteverteilung möglich ist.

In einer weiteren erfindungsgemäßen Alternative ist der metallische Ring als geschlossener Ring mit vorbestimmten Durchmesser ausgebildet, wobei der geschlossene Ring bei der Herstellung des weiblichen Leitungsabschnitts in dem Kunststoff des weiblichen Leitungsabschnitts einbettbar ist.

Durch die Einbettung des geschlossenen Ringes ist eine optimale Kraftübertragung der Kräfte des Federsperrelements auf den weiblichen Leitungsabschnitt gegeben.

Die geschilderten Lösungen sorgen für eine sichere Kraftübertragung vom Federsperrelement auf den weiblichen Leitungsabschnitt. Dadurch kann sichergestellt werden, dass auch bei hohen Flächenpressungen zwischen Federsperrelement und weiblichem Leitungsabschnitt ein Ausbrechen der Sperröffnungen auszuschließen ist.

Anhand der Zeichnung werden nachstehend Ausführungsbeispiele der Erfindung näher erläutert. Es zeigt:
Fig, 1 eine Explosionsdarstellung des weiblichen Leitungsabschnitts einer erfindungsgemäßen Steckkupplung mit geschlitztem Federring,
Fig. 2 den weiblichen Leitungsabschnitt mit geschlitztem Federring in montiertem Zustand in einer perspektivischen Darstellung und
Fig. 3 einen weiblichen Leitungsabschnitt mit geschlossenem, eingebetteten metallischen Ring in einem Längsschnitt.

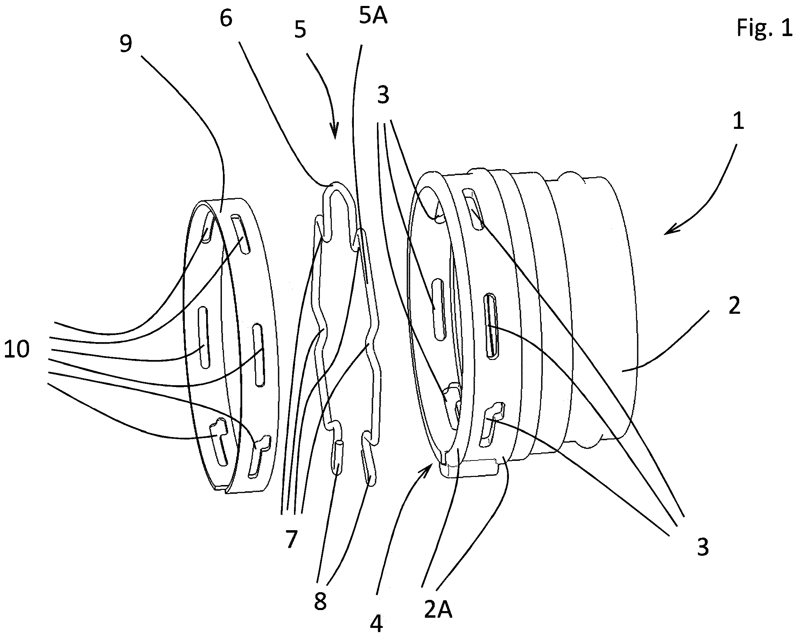

Die Figur 1 zeigt einen weiblichen Teil 1 einer erfindungsgemäßen Steckkupplung in einer Explosionsdarstellung. Der weibliche Teil 1 wird im weiteren als Kupplungsmuffe 1 bezeichnet und weist einen Grundkörper 2 mit zwei ringförmig angeordneten, axial beabstandeten Ringstegen 2A auf. Der Grundkörper 2 weist an seinem, einem hier nicht gezeigten Kupplungsstecker zugeordneten Ende ringförmig angeordnete, in Umfangsrichtung beabstandete Sperrschlitze 3 sowie eine Ausnehmung 4 auf. Die Ausnehmung 4 dient zur Aufnahme einer hier nicht gezeigten Verdrehsicherung.

Eine Sperrklammer 5 weist einen Federbügel 6 sowie Sperrklinken 7 auf. Die Sperrklammer 5 ist aus einem Federdraht 5A ausgebildet, wobei Federbügel 6 und Sperrklinken 7 durch Biegungen des Drahtes 5A ausgebildet sind. Die Enden der Sperrklammer 5 sind zur Erleichterung der Montage als abgerundete Endstücke 8 ebenfalls durch Biegung des Drahtes 5A ausgebildet.

Ein geschlitzter Verstärkungsring 9 aus metallischem Werkstoff weist Durchbrüche 10 auf, die in Lage und Anzahl mit den Sperrschlitzen 3 der Kupplungsmuffe 1 korrespondieren.

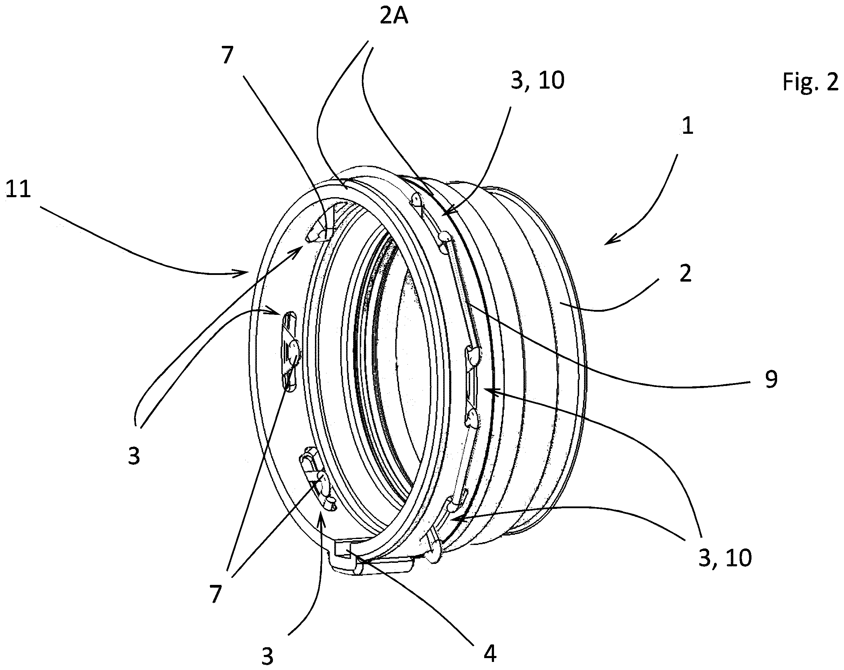

In der Figur 2 ist der Zusammenbau der Kupplungsmuffe 1 mit dem Verstärkungsring 9 und der Sperrklammer 5 perspektivisch dargestellt. Der geschlitzte Verstärkungsring 9 ist auf den Grundkörper 2 der Kupplungsmuffe 1 derart aufgeschoben, dass er zwischen den Ring gestiegen 2A zu liegen kommt und seine Durchbrüche 10 mit den Sperrschlitzen 3 des Grundkörpers 2 der Kupplungsmuffe 1 jeweils eine fluchtende Öffnung bilden.

Die Sperrklammer 5 ist derart auf den Verbund aus Grundkörper 2 und Sperrklammer 5 aufgesteckt, dass ihre Sperrklinken 7 in die fluchtenden Öffnungen aus Durchbrüchen 10 des Verstärkungsrings 9 und Sperrschlitzen 3 des Grundkörpers 2 der Kupplungsmuffe 1 hindurch ragen.

Ein hier nicht gezeigter Kupplungsstecker ist die die Kupplungsmuffe 1 einsteckbar, wobei die Sperrklinken 7 federnd nach außen bewegbar sind und hinter geeignet ausgeformten Elementen des nicht gezeigten, an sich bekannten Kupplungssteckers einrastbar sind.

Treten bei fertig montierter Kupplung dynamische Kräfte in axialer Richtung auf, sind diese über die Sperrklammer 5 auf den Verstärkungsring 9 übertragbar. Die Sperrklammer 5 stützt sich dabei an den Ringstegen 2A der Kupplungsmuffe 1 ab, so dass die Kräfte nicht zwischen den Sperrklinken 7 der Sperrklammer 5 und den Sperrschlitzen 3 der Kupplungsmuffe 1, sondern zwischen dem Verstärkungsring 9 und den Ringstegen 2A abgefangen werden. Aufgrund der wesentlich größeren Berührflächen sind daher die Flächenpressung in deutlich geringer, so dass ein Ausbrechen der Sperrschlitze 3 vermeidbar ist.

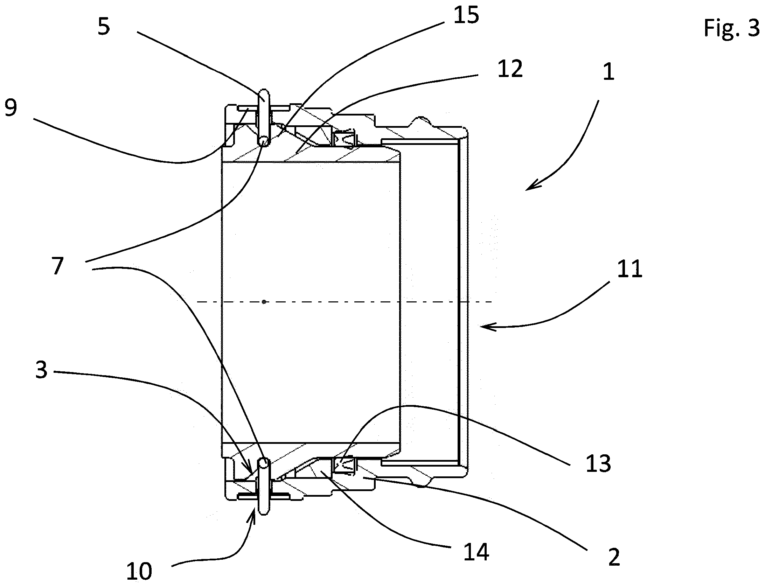

In der Figur 3 ist eine weitere Ausführungsform der erfindungsgemäßen Kupplungsmuffe 1 in einem Längsschnitt gezeigt. In dieser Darstellung ist ein Kupplungsstecker 12 in den Grundkörper 2 der Kupplungsmuffe 1 eingesteckt. Zwischen Kupplungsstecker 12 und Kupplungsmuffe 1 sind eine Dichtung 13 und einen Stützring 14 angeordnet. Die Sperrklammer 5 ragt mit ihren Sperrklinken 7 durch die Durchbrüche 10 und die Sperrschlitze 3 in das Innere 11 der Kupplungsmuffe 1 und greifen hinter einen Sperrsteg 15 des Kupplungssteckers 12. Der Verstärkungsring 9 ist in dieser Ausführungsform bereits bei der Herstellung des Grundkörpers 2 der Kupplungsmuffe 1 in den Grundkörper 2 eingebettet worden, so dass er zusätzlich zum Formschluss auch einen Haftreibschluss mit der Kupplungsmuffe 1 bildet. Auf diese Weise ist zum einen die übertragbare Kraft vergrößert, zum anderen eine nachträgliche Montage des Verstärkungsrings 9 nicht erforderlich.

### Bezugszeichenliste

### (Teil der Beschreibung)

- 1: weiblicher Teil, Kupplungsmuffe
- 2: Grundkörper der Kupplungsmuffe 1
- 2A: Ringstege des Grundkörpers 2
- 3: Sperrschlitze im Grundkörper 2 der Kupplungsmuffe 1
- 4: Ausnehmung im Grundkörper 2
- 5: Sperrklammer
- 5A: Federdraht der Sperrklammer 5
- 6: Federbügel der Sperrklammer 5
- 7: Sperrklinken der Sperrklammer 5
- 8: Endstücke der Sperrklammer 5
- 9: Verstärkungsring
- 10: Durchbrüche im Verstärkungsring 9
- 11: Inneres der Kupplungsmuffe 1
- 12: Kupplungsstecker
- 13: Dichtung
- 14: Stützring
- 15: Sperrsteg des Kupplungssteckers 12

## Patentansprüche

1. Steckkupplung für Fluidleitungen, umfassend
mindestens einen weiblichen Leitungsabschnitt (1), der im Wesentlichen aus Kunststoff ausgebildet ist und in den ein männlicher Leitungsabschnitt (12) dichtenden einsteckbar ist und
mindestens eine federnde Verriegelungsvorrichtung, mittels derer die Leitungsabschnitte (1, 12) miteinander verriegelbar und entriegelbar sind, wobei die Vorrichtung mindestens ein Federsperrelement (5) aufweist und der weibliche Leitungsabschnitt (1) Sperröffnungen (3) aufweist, die mit dem mindestens einen Federsperrelement (5) korrespondieren,
der weibliche Leitungsabschnitt (1) im Bereich der Sperröffnungen (3) mindestens eine Verstärkung (9) aus einem metallischen Werkstoff aufweist, **dadurch gekennzeichnet, dass** die mindestens eine metallische Verstärkung (9) als Ring ausgebildet ist, der im Bereich der Sperröffnungen (3) um den weiblichen Leitungsabschnitt (1) herum angeordnet ist, wobei der metallische Ring (9) Durchbrüche (10) aufweist, die mit den Sperröffnungen (3) korrespondieren, so dass das Federsperrelement (5) bei fertig montierter Kupplung sowohl durch die Durchbrüche (10) des metallischen Ringes (9) als auch durch die Sperröffnungen (3) eingreifen kann,
wobei
- der metallische Ring (9) als geschlitzter Federring ausgebildet ist und der weibliche Leitungsabschnitt (1) axial voneinander beabstandete Ringstege (2A) aufweist, zwischen denen der geschlitzte Federring (9) positionierbar ist, so dass der Federring (9) axial auf dem weiblichen Leitungsabschnitt (1) festgelegt ist, oder
- der metallische Ring (9) als geschlossener Ring mit vorbestimmten Durchmesser ausgebildet ist, wobei der geschlossene Ring (9) in dem Kunststoff des weiblichen Leitungsabschnitts (1) eingebettet ist.

## Claims

1. Plug-in coupling for fluid lines, comprising
at least one female line portion (1), which is made substantially of plastic and into which a male line portion (12) is able to be plugged in a sealing manner, and
at least one resilient locking device, by means of which the line portions (1, 12) are able to be locked together and unlocked from one another, wherein the device has at least one spring blocking element (5) and the female line portion (1) has blocking openings (3) which correspond to the at least one spring blocking element (5),
the female line portion (1) has in the region of the blocking openings (3) at least one reinforcement (9) made of a metallic material, **characterized in that** the at least one metallic reinforcement (9) is in the form of a ring which is arranged around the female line portion (1) in the region of the blocking openings (3), wherein the metallic ring (9) has apertures (10) which correspond to the blocking openings (3) such that the spring blocking element (5), with the coupling fully assembled, can engage both through the apertures (10) in the metallic ring (9) and through the blocking openings (3),
wherein
- the metallic ring (9) is in the form of a split spring ring and the female line portion (1) has ring webs (2A) which are spaced axially apart from one another and between which the split spring ring (9) is able to be positioned such that the spring ring (9) is fixed axially to the female line portion (1), or
- the metallic ring (9) is in the form of a closed ring with a predetermined diameter, wherein the closed ring (9) is embedded in the plastic of the female line portion (1).

## Revendications

1. Accouplement enfichable pour conduites de fluide, comprenant
au moins une section de conduite femelle (1), qui est essentiellement réalisée en matière plastique et dans laquelle une section de conduite mâle (12) peut être insérée de manière étanche, et
au moins un dispositif de verrouillage élastique au moyen duquel les sections de conduite (1, 12) peuvent être verrouillées et déverrouillées l'une de l'autre, le dispositif présentant au moins un élément de blocage élastique (5) et la section de conduite femelle (1) présentant des ouvertures de blocage (3) qui correspondent à l'au moins un élément de blocage élastique (5),
la section de conduite femelle (1) présentant, dans la zone des ouvertures de blocage (3), au moins un renforcement (9) en un matériau métallique, **caractérisé en ce que** l'au moins un renforcement métallique (9) est réalisé sous forme d'anneau qui est agencé autour de la section de conduite femelle (1) dans la zone des ouvertures de blocage (3), l'anneau métallique (9) présentant des passages (10) qui correspondent aux ouvertures de blocage (3), de telle sorte que l'élément de blocage élastique (5) peut s'engager, lorsque l'accouplement est entièrement monté, aussi bien à travers les passages (10) de l'anneau métallique (9) qu'à travers les ouvertures de blocage (3),
- l'anneau métallique (9) étant réalisée sous forme d'anneau élastique fendu et la section de conduite femelle (1) présentant des nervures annulaires (2A) espacées axialement les unes des autres, entre lesquelles l'anneau élastique fendu (9) peut être positionné de telle sorte que l'anneau élastique (9) est fixé axialement sur la section de conduite femelle (1), ou
- l'anneau métallique (9) étant réalisé sous forme d'anneau fermé de diamètre prédéterminé, l'anneau fermé (9) étant noyé dans la matière plastique de la section de conduite femelle (1).
